# EUROPÄISCHE PATENTSCHRIFT

(11) **EP 4 256 182 B1**
(45) Veröffentlichungstag und Bekanntmachung des Hinweises auf die Patenterteilung: **28.08.2024**
(21) Anmeldenummer: 21835169.0
(22) Anmeldetag: 30.11.2021
(51) Int. Cl.: F01N 3/20

(54) **VERFAHREN UND VORRICHTUNG ZUR DOSIERUNG EINER WÄSSRIGEN HARNSTOFFLÖSUNG**
METHOD AND APPARATUS FOR DOSING AN AQUEOUS UREA SOLUTION
PROCÉDÉ ET DISPOSITIF PERMETTANT LE DOSAGE D'UNE SOLUTION D'URÉE AQUEUSE

(30) Priorität: 03.12.2020 DE 102020215263
(43) Veröffentlichungstag der Anmeldung: 11.10.2023
(73) Patentinhaber: Vitesco Technologies GmbH, 93055 Regensburg (DE)
(72) Erfinder: LUEBBERT, Tobias, 80687 München (DE); BAUER, Peter, 80687 München (DE); KÖHLER, Cornelius, 80687 München (DE); IDAR, Youness, 80687 München (DE)
(74) Vertreter: Vitesco Technologies
(86) Internationale Anmeldenummer: PCT/EP2021/083502
(87) Internationale Veröffentlichungsnummer: WO 2022/117542

(56) Entgegenhaltungen:
- WO-A1-2016/144692
- GB-A- 2 546 764
- US-A1- 2013 263 580
- US-B1- 9 657 628

## Beschreibung

### Technisches Gebiet

Die Erfindung betrifft ein Verfahren zur Steuerung einer Fördervorrichtung für eine wässrige Harnstofflösung in einem Kraftfahrzeug, mit einem Tank, mit einer Saugleitung, mit einer Pumpe, mit einer Druckleitung und mit einem Injektor, wobei die wässrige Harnstofflösung von dem Tank entlang der Saugleitung, durch die Pumpe, durch die Druckleitung hin zum Injektor förderbar ist, wobei das Verfahren dazu ausgebildet ist einen Spülvorgang zumindest der Druckleitung durchzuführen, wobei die Pumpe während des Spülvorgangs entgegen ihrer gewöhnlichen Förderrichtung betrieben wird und der Injektor in einer ersten Phase des Verfahrens geschlossen ist, wobei die Pumpe für eine Betriebsdauer t1 und mit einer Drehgeschwindigkeit n1 während der ersten Phase des Verfahrens betrieben wird. Außerdem betrifft die Erfindung eine Vorrichtung zum Ausführen des Verfahrens.

### Stand der Technik

Weltweit sind in vielen Staaten gesetzliche Regelungen getroffen worden, die einen oberen Grenzwert für den Gehalt von bestimmten Substanzen im Abgas von Verbrennungskraftmaschinen festlegen. Hierbei handelt es sich zumeist um Substanzen, deren Abgabe an die Umwelt unerwünscht ist. Eine dieser Substanzen stellt Stickoxid (NOx) dar, deren Anteil im Abgas gesetzlich festgelegte Grenzwerte nicht übersteigen darf. Auf Grund der Rahmenbedingungen, beispielsweise der Auslegung der Verbrennungskraftmaschinen im Hinblick auf günstige Verbrauche und ähnliches, ist die innermotorische Vermeidung der Stickoxidemission bei der Verminderung des Anteils der Stickoxide im Abgas nur begrenzt tauglich, so dass für die Einhaltung relativ niedriger Grenzwerte eine Abgasnachbehandlung erforderlich ist. Hierbei hat sich herausgestellt, dass eine selektive katalytische Reduktion (SCR, selective catalytic reduction) der Stickoxide vorteilhaft ist. Diese SCR-Methode benötigt ein Reduktionsmittel, welches stickstoffhaltig ist. Insbesondere hat sich der Einsatz von Ammoniak (NH3) als Reduktionsmittel als eine mögliche Alternative herausgestellt. Auf Grund der chemischen Eigenschaften und der gesetzlichen Bestimmungen in vielen Staaten wird üblicherweise der Ammoniak nicht als reines Ammoniak vorgehalten, da dies insbesondere bei Kraftfahrzeugen oder anderen mobilen Anwendungen zu Problemen führen kann. Vielmehr werden statt einer Bevorratung der Reduktionsmittel selbst oftmals Reduktionsmittelvorläufer gespeichert und mitgeführt. Unter einem Reduktionsmittelvorläufer wird insbesondere ein Stoff verstanden, welcher das Reduktionsmittel abspaltet oder chemisch in das Reduktionsmittel umgewandelt werden kann. Beispielsweise stellt für das Reduktionsmittel Ammoniak Harnstoff einen Reduktionsmittelvorläufer dar.

Die wässrige Ammoniaklösung, der Harnstoff, wird in einem Tank mitgeführt und mittels einer geeigneten Fördervorrichtung in genau dosierten Mengen in den Abgastrakt gefördert. Die wässrige Ammoniaklösung wird hierzu entlang einer Druckleitung von der Fördervorrichtung hin zu einem Injektor gefördert. Durch den Injektor wird die wässrige Harnstofflösung schließlich in den Abgastrakt eingebracht und dort thermisch in Ammoniak und Wasser umgewandelt, um im Folgenden die Reduktion der im Abgas enthaltenen Stickoxide zu bewirken.

Neben anderen Funktionalitäten ist in der Fördervorrichtung eine Spülfunktion realisiert, um beispielsweise die Förderleitung zu spülen und von etwaigen Rückständen der wässrigen Ammoniaklösung zu befreien. Hierzu wird beispielsweise bei geschlossenem Injektor ein Unterdruck in der Druckleitung erzeugt, indem die Pumpe der Fördervorrichtung entgegen der normalen Förderrichtung betrieben wird. Durch das Öffnen des Injektors nach dem Erzeugen eines Unterdrucks in der Druckleitung wird die noch in der Druckleitung befindliche wässrige Ammoniaklösung schließlich in Richtung des Tanks zurückgesaugt. Zusätzlich kann das Spülen auch durch das Betreiben der Pumpe unterstützt werden.

Die Druckschrift GB 2 546 764 A offenbart ein Verfahren zum Spülen eines Dosiersystems zur selektiven katalytischen Reduktion (SCR) mit einem Harnstoffreservoir, einem Harnstoffabgabemodul, das mindestens eine Pumpe, einen Dosierinjektor, der so angeordnet ist, dass er Harnstoff in ein Motorabgasrohr sprüht, und eine Zuführleitung umfasst. Das Verfahren umfasst: Aktivieren einer Rückwärtspumpe oder einer Pumpe in einer umgekehrten Richtung; Öffnen des Dosierinjektors; Anhalten der Rückwärtspumpe oder der Pumpe in umgekehrter Richtung und Schließen des Dosierinjektors; Aktivieren einer Vorwärtspumpe oder der Pumpe in einer Vorwärtsrichtung; Anhalten der Vorwärtspumpe oder der Pumpe in Vorwärtsrichtung und Öffnen des Dosierinjektors; und Aktivieren der Rückwärtspumpe oder der Pumpe in umgekehrter Richtung. Ein optionaler letzter Schritt kann das Schließen des Dosierinjektors umfassen. Die Erfindung erstreckt sich auch auf ein SCR-Dosiersystem, das zur Durchführung des Verfahrens geeignet ist.

Die Druckschrift US 2013/263580 A1 offenbart SCR-System zur Behandlung der Abgase eines Verbrennungsmotors, wobei dieses System eine Leitung zur Einspeisung einer Harnstofflösung in die Abgase und eine Pumpe umfasst, die in der Lage ist, sowohl die Harnstofflösung in die Abgase einzuspeisen als auch mindestens einen Teil der Leitung durch Ansaugen eines Gases mittels einer Ansaugvorrichtung zu spülen, wobei dieses System auch eine Steuereinheit umfasst, die in der Lage ist, den Betrieb der Pumpe und den der Ansaugvorrichtung im Verlauf ein und desselben Spülvorgangs nacheinander zu aktivieren und/oder zu deaktivieren.

Nachteilig an den Lösungen im Stand der Technik ist insbesondere, dass der Spülvorgang nicht variabel ist und so insbesondere nicht aufgrund von Veränderungen des Gesamtsystems, beispielsweise einer Abnutzung der Pumpe, angepasst werden kann.

### Darstellung der Erfindung, Aufgabe, Lösung, Vorteile

Daher ist es die Aufgabe der vorliegenden Erfindung ein Verfahren zu schaffen, welches es erlaubt den Spülvorgang abhängig von Zustandsgrößen der Vorrichtung, wie beispielsweise der Alterung der Pumpe oder der Förderleistung der Pumpe, anzupassen. Außerdem ist es die Aufgabe der Erfindung eine Vorrichtung zur Ausführung des Verfahrens zu schaffen.

Die Aufgabe hinsichtlich des Verfahrens wird durch ein Verfahren mit den Merkmalen von Anspruch 1 gelöst.

Ein Ausführungsbeispiel der Erfindung betrifft ein Verfahren zur Steuerung einer Fördervorrichtung für eine wässrige Harnstofflösung in einem Kraftfahrzeug, mit einem Tank, mit einer Saugleitung, mit einer Pumpe, mit einer Druckleitung und mit einem Injektor, wobei die wässrige Harnstofflösung von dem Tank entlang der Saugleitung, durch die Pumpe, durch die Druckleitung hin zum Injektor förderbar ist, wobei das Verfahren dazu ausgebildet ist einen Spülvorgang zumindest der Druckleitung durchzuführen, wobei die Pumpe während des Spülvorgangs entgegen ihrer gewöhnlichen Förderrichtung betrieben wird und der Injektor in einer ersten Phase des Verfahrens geschlossen ist, wobei die Pumpe für eine Betriebsdauer t1 und mit einer Drehgeschwindigkeit n1 während der ersten Phase des Verfahrens betrieben wird, wobei in dieser ersten Phase ein von der Betriebsdauer t1 und der Drehgeschwindigkeit n1 direkt abhängiger Unterdruck p1 in der Druckleitung erzeugt wird, wobei die Betriebsdauer t1 und die Drehgeschwindigkeit n1 abhängig von einem Kalibrierungsvorgang, welcher bei der erstmaligen Inbetriebnahme der Vorrichtung durchgeführt wird, festgelegt werden, und diese und der sich daraus ergebende Unterdruck p1 in einem Speicher der Vorrichtung abgelegt werden, wobei in einer zweiten Phase des Verfahrens der Injektor geöffnet ist und die Pumpe weiterhin entgegen ihrer gewöhnlichen Förderrichtung betrieben wird.

Die Betriebsdauer der Pumpe und deren Drehgeschwindigkeit bestimmen die von der Pumpe förderbare Fluidmenge. Eine erhöhte Drehgeschwindigkeit oder eine verlängerte Betriebsdauer führen zu einer höheren Fördermenge. Da die Pumpe in der ersten Phase die in der Druckleitung befindliche wässrige Harnstofflösung und die möglicherweise in der Druckleitung befindlich Luft von dem geschlossenen Injektor am Ende der Druckleitung weg fördert, wird in der Druckleitung ein Unterdruck erzeugt. Je länger die Pumpe betrieben wird und je schneller die Pumpe dreht, desto höher kann der dadurch erzeugte Unterdruck werden.

Eigenschaften wie die Kompressibilität der in der Druckleitung befindlichen Fluide, das innere Volumen der Druckleitung, die Dichtigkeit der Vorrichtung nehmen weiterhin Einfluss auf den maximal erreichbaren Unterdruck. Für eine spezifisches Vorrichtung ist davon auszugehen, dass das Volumen der Druckleitung und die Dichtigkeit der Vorrichtung unveränderlich sind, so dass diese Faktoren für die Erzeugung des Unterdrucks über die Lebensdauer der Vorrichtung hinweg weniger relevant sind. Die Entstehung des Unterdrucks wird maßgeblich von der Drehgeschwindigkeit der Pumpe und der Betriebsdauer der Pumpe bestimmt. Weitere wichtige Einflussgrößen für die Entstehung des Unterdrucks sind beispielsweise die Performanceänderung der Pumpe über die Lebenszeit und Performanceunterschiede zwischen grundsätzlich baugleichen Pumpen aufgrund von unvermeidlichen Fertigungstoleranzen.

Der erzeugte Unterdruck in der ersten Phase kann bei einer bekannten Vorrichtung durch die Betriebsdauer der Pumpe und die Drehgeschwindigkeit genau vorhergesagt werden, da das Entstehen des Unterdrucks im Wesentlichen durch diese beiden Größen beeinflusst ist. Wesentlich genauer lässt sich der Druck in der Druckleitung jedoch durch einen Drucksensor ermitteln, dieser ermöglicht bevorzugt zu jeder Zeit die korrekte Ermittlung des in der Druckleitung vorherrschenden Drucks. Bevorzugt ist der Drucksensor sowohl zur Erfassung des in der ersten Phase entstehenden Unterdrucks ausgelegt als auch zur Erfassung von Überdrücken, wie sie beispielsweise beim Einspritzen der wässrigen Harnstofflösung durch den Injektor in den Abgastrakt hinein entstehen.

Der Spülvorgang der Vorrichtung ist in zwei Phase geteilt. In der ersten Phase ist der Injektor geschlossen und die Pumpe fördert entgegen ihrer gewöhnlichen Förderrichtung. Die gewöhnliche Förderrichtung der Pumpe ist so, dass wässrige Harnstofflösung aus dem Tank in die Druckleitung hin zum Injektor gefördert wird. Mit dem Term entgegen der gewöhnlichen Förderrichtung ist gemeint, dass die wässrige Harnstofflösung aus der Druckleitung hin zum Tank gefördert wird. Dies wird durch eine Richtungsumkehr der Drehrichtung der Pumpenstufe der Pumpe erreicht.

Da der Injektor in der ersten Phase geschlossen ist, kann die Pumpe wässrige Harnstofflösung aus der Druckleitung in Richtung Tank fördern und auch Luft aus der Druckleitung hinausfördern. Da aber durch den Injektor keinerlei Fluid in die Druckleitung nachströmen kann, wird ein Unterdruck in der Druckleitung erzeugt. Dies ähnelt dem Prinzip des Auseinanderziehens einer Luftpumpe, wenn die Ventilöffnung blockiert ist.

In der zweiten Phase wird der Injektor schließlich geöffnet, so dass ein Fluid aus dem Abgastrakt in die Druckleitung nachströmen kann. Die Pumpe fördert in dieser zweiten Phase bevorzugt weiter entgegen ihrer gewöhnlichen Förderrichtung. Durch das Nachströmen von Fluid in die Druckleitung und die weitere Fördertätigkeit der Pumpe wird das in der Druckleitung enthaltene Fluid, welches sowohl Luft als auch die wässrige Harnstofflösung sein kann, in Richtung des Tanks gefördert. Je stärker er Unterdruck vor dem Öffnen des Injektors war und je schneller und länger die Pumpe fördert, umso mehr Fluid wird aus der Druckleitung in Richtung des Tanks gefördert.

Bevorzugt wird die Druckleitung von dem Fluid befreit, während jedoch die Saugleitung und die Pumpe, insbesondere die Pumpenstufe, nicht vollständig von dem Fluid befreit werden.

Die von der jeweiligen spezifischen Vorrichtung abhängigen Werte für die Betriebsdauer t1 und die Drehgeschwindigkeit n1 der Pumpe werden bevorzugt bei einem sogenannten "end of line" Check ermittelt, welcher nach der Montage der Vorrichtung im Fahrzeug zur Überprüfung der Funktionalität durchgeführt wird. Es wird bei diesem Check ermittelt wie lange und wie schnell die Pumpe betrieben werden muss, um den gewünschten Unterdruck p1 zu erzeugen. Die hierbei ermittelten Werte für die Betriebsdauer t1 und die Drehgeschwindigkeit n1 werden in einem Speicher des Systems abgelegt. Es ist somit ermittelt und abgespeichert, wie lange und wie schnell die Pumpe bei einer bekannten Vorrichtung im Auslieferungszustand betrieben werden muss, um den gewünschten Unterdruck zu erzeugen.

Da die Vorrichtung über die Lebensdauer auch einer gewissen Alterung unterliegt, ist nicht sicher, dass eine zu Beginn definierte Betriebsdauer bei einer festgelegten Drehgeschwindigkeit auch bei einer bereits gealterten Vorrichtung zum gleichen gewünschten Unterdruck führen. Insbesondere die Pumpe unterliegt einer Alterung. Durch Verschleiß oder Verschmutzung kann die Förderleistung der Pumpe beeinträchtigt werden. Bei identischer Drehgeschwindigkeit und Betriebsdauer kann die Fördermenge somit abnehmen. Um diesen Effekt auszugleichen, muss das erfindungsgemäße Verfahren entsprechend ausgestaltet sein.

Besonders vorteilhaft ist es, wenn bei zumindest einem der erstmaligen Inbetriebnahme nachfolgenden Startvorgang der Pumpe ein Spülvorgang durchgeführt wird, wobei der dann in der ersten Phase des Spülvorgangs erzeugte Unterdruck p2 in der Druckleitung erfasst wird, und mit dem Unterdruck p1 abgeglichen wird, der sich aus der im Speicher abgelegten Betriebsdauer t1 und der Drehgeschwindigkeit n1 ergibt.

Der Spülvorgang kann einmalig, in festgelegten Intervallen oder bei jedem Startvorgang der Pumpe beziehungsweise der Vorrichtung durchgeführt werden. Hierbei wird auf Grundlage der im Speicher abgelegten Werte für die Betriebsdauer und die Drehgeschwindigkeit der Unterdruck ermittelt, der sich bei diesen Rahmenbedingungen in der Druckleitung ergibt.

Sofern der erzeugte Unterdruck p2 dem ursprünglich gewünschten Unterdruck p1 entspricht, muss keine Anpassung stattfinden. Sollte der Unterdruck p2 jedoch geringer sein, und somit weniger Unterdruck bei gleichbleibenden Betriebsbedingungen der Pumpe erzeugt werden, so muss eine entsprechende Anpassung durch das erfindungsgemäße Verfahren erfolgen, um den Betrieb der Vorrichtung zu ermöglichen.

Hierzu ist es vorteilhaft, wenn ein Abgleich der Unterdrücke p1 und p2 durchgeführt wird, wobei abhängig von der Abweichung zwischen dem Unterdruck p1 und dem Unterdruck p2 ein Korrekturfaktor K1 errechnet wird, um welchen die Betriebsdauer und/oder die Drehgeschwindigkeit von dem Wert t1 und/oder n1 auf einen Wert t2 und/oder n2 angepasst wird.

Die Erfassung der Unterdrücke und ein Vergleich derer kann bevorzugt in einer Recheneinheit, beispielsweise einem Steuergerät, durchgeführt werden.

Sofern der Unterdruck p2 geringer ist als der Unterdruck p1 muss eine Verlängerung der Betriebsdauer veranlasst werden und/oder eine Erhöhung der Drehgeschwindigkeit, um zu erreichen, dass der Unterdruck p2 sich dem Niveau von p1 annähert und idealerweise identisch mit diesem Unterdruck p1 wird. Die Betriebsparameter der Pumpe werden erfindungsgemäß daher mittels einem aus dem Vergleich ermittelten Korrekturfaktor K1 verrechnet und somit werden neue Betriebsparameter im Speicher für den weiteren Betrieb abgelegt.

Bei zukünftigen Spülvorgängen kann weiterhin ein Vergleich gegenüber dem Unterdruck p1 und den diesem Unterdruck zugrundliegenden Betriebsparametern stattfinden, oder ein Vergleich mit dem nach der Korrektur erreichten Unterdruck p2.

Dies betrifft insbesondere die Betriebsparameter wie die Betriebsdauer und die Drehgeschwindigkeit. Da die Veränderungen der Vorrichtung, welche zu einer Veränderung des Unterdrucks führen, regelmäßig nicht reversibel sind, ist davon auszugehen, dass der mit den neu gefundenen Betriebsparametern t2 und n2 erzeugt Unterdruck p2 zukünftig ebenfalls nur durch eine weitere Korrektur der Betriebsparameter erreicht werden kann.

Ein bevorzugtes Ausführungsbeispiel ist dadurch gekennzeichnet, dass während der zweiten Phase des Verfahrens durch den erzeugten Unterdruck und den fortwährenden Betrieb der Pumpe entgegen ihrer gewöhnlichen Förderrichtung eine Spülung der Druckleitung erreicht wird, wobei in der Druckleitung befindliche Fluide in Richtung der Saugleitung hin zum Tank gefördert werden. Bevorzugt wird die Druckleitung dabei weitestgehend von Fluiden geleert. Es ist jedoch erwünscht, dass nicht die gesamte Vorrichtung und insbesondere nicht die Saugleitung und die Pumpenstufe vollständig entleert werden, um einen Trockenlauf der Pumpe zu vermeiden.

Auch ist es zu bevorzugen, wenn der Korrekturfaktor K1, welcher abhängig von der Abweichung zwischen dem Unterdruck p1 und dem Unterdruck p2 errechnet wird, genutzt wird, um die Betriebsdauer t3 der Pumpe und oder die Drehgeschwindigkeit n3 während der zweiten Phase des Verfahrens anzupassen.

Durch die zuvor beschriebene Alterung und den Verschleiß der Vorrichtung kann es auch notwendig werden die Betriebsdauer und die Drehgeschwindigkeit in der zweiten Phase zu erhöhen, um mehr Fluidmenge aus der Druckleitung heraus zu fördern.

Darüber hinaus ist es vorteilhaft, wenn der ersten Phase und der zweiten Phase eine dritte Phase nachgeschaltet ist, wobei in der dritten Phase die Pumpe in ihrer gewöhnlichen Förderrichtung betrieben wird und somit ein Überdruck in der Druckleitung erzeugt wird, wobei die Betriebsdauer t4 und/oder die Drehgeschwindigkeit n4 der Pumpe in dieser dritten Phase um den errechneten Korrekturfaktor K1 von einem Ausgangswert verändert wird.

Die dritte Phase stellt den Druckaufbau in der Druckleitung dar. Es wird durch das Betreiben der Pumpe in ihrer gewöhnlichen Förderrichtung wässrige Harnstofflösung aus dem Tank in die Druckleitung gefördert.

Da der Verschleiß der Pumpe die Förderleistung in ihrer gewöhnlichen Förderrichtung im gleichen Maße beeinflusst wie entgegen ihrer gewöhnlichen Förderrichtung, werden auch die Betriebsdauer t4 und/oder die Drehgeschwindigkeit n4 um den Korrekturfaktor K1 angepasst, um sicherzustellen, dass ein ausreichender Überdruck in der Druckleitung aufgebaut wird.

Weiterhin ist es vorteilhaft, wenn der ersten Phase und der zweiten Phase des Verfahrens eine vierte Phase nachgeschaltet ist, wobei nach der vierten Phase die dritte Phase folgt oder das Verfahren beendet wird, wobei während der vierten Phase der Injektor geschlossen ist und die Pumpe entgegen ihrer gewöhnlichen Förderrichtung für eine Betriebsdauer t5 mit einer Drehgeschwindigkeit n5 betrieben wird.

Die hier beschriebene vierte Phase entspricht der ersten Phase des bereits beschriebenen Spülvorgangs. Es wird wieder ein Unterdruck p5 in der Druckleitung bei geschlossenem Injektor aufgebaut. Hierzu wird die Pumpe entgegen ihrer gewöhnlichen Fördervorrichtung für die Betriebsdauer t5 mit einer Drehgeschwindigkeit n5 betrieben.

Auch ist es zweckmäßig, wenn ein Unterdruck p5 in der Druckleitung ermittelt wird und ein Abgleich mit dem im Speicher abgelegten Unterdruck p1 vollzogen wird, wobei das Verhältnis des Unterdrucks p5 zum Unterdruck p1 einen direkten Rückschluss auf die in der Druckleitung verblieben Luft und die Menge der in der Druckleitung verbliebene wässrige Harnstofflösung erlaubt.

Der Abgleich des in der vierten Phase erzeugten Unterdrucks p5 mit dem im Speicher abgelegten Unterdruck p1 erlaubt es direkt einen Rückschluss auf die in der Druckleitung enthaltene Menge der wässrigen Harnstofflösung und die dort enthaltene Luft zu ziehen. Dies folgt direkt aus den physikalischen Eigenschaften von Gasen und Flüssigkeiten, wobei Gase, in diesem Fall Luft, eine höhere Kompressibilität aufweisen als Flüssigkeiten. Durch das Verhältnis der beiden Unterdrücke zueinander kann bei ansonsten bekannten Bedingungen genau auf die in der Druckleitung befindlichen Fluidmengen rückgeschlossen werden.

Bei gleicher Drehgeschwindigkeit der Pumpe und gleicher Laufzeit ist der erreichbare Unterdruck in der Druckleitung abhängig vom Verhältnis der in der Druckleitung befindlichen Flüssigkeit und dem in der Druckleitung befindlichen Gas. Im idealen Extremfall ist die Druckleitung beispielsweise vollständig mit Flüssigkeit gefüllt. Im ungünstigsten Extremfall ist die Druckleitung vollständig mit Gas gefüllt.

Nun kann für eine spezifische Druckleitung mit einer gegebenen Länge und einem gegebenen Volumen experimentell für jedes Verhältnis von Flüssigkeit zu Gas ein maximal erreichbarer Unterdruck bei definierten Betriebsbedingungen ermittelt werden. Die so ermittelten Werte können in einem Speichergerät abgelegt werden, so dass dann im Betrieb von dem ermittelten Unterdruck p5 in der Druckleitung auf das jeweilige Verhältnis von Gas zu Flüssigkeit rückgeschlossen werden kann.

Darüber hinaus ist es vorteilhaft, wenn die tatsächlich in der Druckleitung verbliebene Menge der wässrigen Harnstofflösung nach Durchlaufen der vierten Phase berechnet wird, wobei hierzu der Unterdruck p5, die Betriebsdauer t5 der Pumpe, die Drehgeschwindigkeit n5 der Pumpe, die statische Durchflussmenge des Injektors und das innere Volumen der Druckleitung verwendet werden.

Bevorzugt wird die tatsächlich in der Druckleitung befindliche Menge der wässrige Harnstofflösung berechnet, indem das maximale Volumen der Druckleitung, die statische Durchflussmenge des Injektors und die Zeit, die der Injektor geöffnet ist, herangezogen wird. Das maximale Leitungsvolumen ist bekannt. In einer definierten Zeit kann durch einen Injektor ein jeweils aufgrund der für den Injektor spezifischen statischen Durchflussmenge ein bestimmtes Fluidvolumen strömen.

Da durch die Pumpe in Richtung des Tanks rückgefördert wird, wird Gas aus dem Abgastrakt durch den geöffneten Injektor in die Druckleitung strömen. Dieses Gas verdrängt die in der Druckleitung befindliche Flüssigkeit. Bei bekanntem Leitungsvolumen und bekanntem durch den Injektor in die Druckleitung gesaugtem Gas, kann das in der Druckleitung verbliebene Volumen der Flüssigkeit berechnet werden.

Da die zu Beginn des Vorgangs in der Druckleitung befindliche Flüssigkeitsmenge nur in Richtung des Tanks aus der Druckleitung gefördert werden kann, kann, bei Kenntnis der Druckleitungslänge und dem Volumen der Druckleitung bei einer bekannten Gasmenge, die in die Druckleitung gesaugt wurde, darauf rückgeschlossen werden, wie weit das Gas in die Druckleitung hinein gesaugt wurde und folglich wo in der Druckleitung die Phasengrenze zwischen dem Gas und der Flüssigkeit ist.

Weiterhin ist es zweckmäßig, wenn die durch einen Vergleich der Unterdrücke p5 und p1 ermittelte in der Druckleitung verbliebene Menge der wässrigen Harnstofflösung mit einer nach dem zuvor beschriebenen Verfahren errechneten in der Druckleitung verbliebenen Menge an wässriger Harnstofflösung verglichen wird, wobei beim Überschreiten eines festgelegten maximalen Differenzwertes zwischen den beiden Mengen ein Korrekturfaktor K2 erzeugt wird, um welchen die Dauer der ersten Phase und/oder der zweiten Phase des Verfahrens korrigiert wird.

Durch den Korrekturfaktor K2 wird die Länge des Spülvorgangs, welcher aus der ersten Phase und der zweiten Phase besteht insgesamt verlängert. Dies führt dazu, dass insgesamt mehr Fluid aus der Druckleitung herausgefördert wird.

Aufgrund der Berechnung des noch in der Druckleitung befindlichen Fluids und insbesondere der Menge der wässrigen Harnstofflösung kann ermittelt werden wie weit die wässrige Harnstofflösung innerhalb der Druckleitung hin zur Pumpe gesaugt wurde. Dies liegt darin begründet, dass die Menge der wässrigen Harnstofflösung und die Menge der Luft in der Druckleitung und die Position der Flüssigkeit innerhalb der Druckleitung bei einem bekannten Volumen der Druckleitung in einem direkten Zusammenhang miteinander stehen. Dadurch kann insbesondere verhindert werden, dass die wässrige Harnstofflösung soweit aus der Druckleitung herausgefördert wird, dass die Pumpenstufe trocken wird und es somit zu einem Trockenlauf der Pumpe kommen könnte.

Die Kenntnis über die genaue Luftmenge, welche in der Druckleitung vorhanden ist, erlaubt es darüber hinaus weiterhin das sogenannte Priming, bei welchem die in der Druckleitung enthaltene Luft durch den Betrieb der Pumpe in ihrer gewöhnlichen Förderrichtung bei geöffneten Injektor aus der Druckleitung gedrückt wird, zu optimieren. Somit kann die Dosierstrategie verbessert werden, da aufgrund der bekannten Leistungsfähigkeit der Pumpe genau bekannt ist wie lange es dauert eine bestimmte Luftmenge aus der Druckleitung zu fördern. Durch die Kenntnis der in der Druckleitung befindlichen Luft, und die Kenntnis der benötigten Zeit, um diese Luft aus der Druckleitung zu fördern, kann genau bestimmt werden, wann die Druckleitung entlüftet ist und die eigentliche Dosierung der wässrigen Harnstofflösung in den Abgastrakt hinein gestartet werden kann.

Auch ist es zweckmäßig, wenn ein Abgleich der Unterdrücke p1 und p2 durchgeführt wird, wobei abhängig von der Abweichung zwischen dem Unterdruck p1 und dem Unterdruck p2 ein Korrekturfaktor K3 errechnet wird, wobei der Korrekturfaktor K3 in der Folge verwendet wird, um die die Betriebsdauer t4 oder die Drehgeschwindigkeit n4 in der dritten Phase anzupassen.

Insbesondere kann durch den Vergleich der Trockenlauf der Pumpe erkannt werden, da es bei einem Trockenlauf der Pumpe nicht möglich ist einen nennenswerten Unterdruck in der Druckleitung aufzubauen. Wenn ein Trockenlauf erkannt wird, wird der Korrekturfaktor K3 dafür genutzt, dass die Betriebsdauer t4 und/oder die Drehgeschwindigkeit n4 in der dritten Phase erhöht wird, damit sichergestellt wird, dass ausreichend Fluid aus dem Tank angesaugt wird und somit eine ausreichende Entlüftung der Druckleitung stattfindet und in der Folge ein gewünschter Überdruck in der Druckleitung erzeugt werden kann.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Förderung einer wässrigen Harnstofflösung in einem Kraftfahrzeug, mit einem Tank, mit einer Saugleitung, mit einer Pumpe, mit einer Druckleitung und mit einem Injektor, wobei die wässrige Harnstofflösung von dem Tank entlang der Saugleitung, durch die Pumpe, durch die Druckleitung hin zum Injektor förderbar ist, wobei ein Verfahren nach den vorhergehenden Ansprüchen mit dieser Vorrichtung durchführbar ist, wobei die Vorrichtung ein Mittel zur Erfassung des Drucks in der Druckleitung aufweist.

Vorteilhafte Weiterbildungen der vorliegenden Erfindung sind in den Unteransprüchen beschrieben.

## Patentansprüche

1. Verfahren zur Steuerung einer Fördervorrichtung für eine wässrige Harnstofflösung in einem Kraftfahrzeug, mit einem Tank, mit einer Saugleitung, mit einer Pumpe, mit einer Druckleitung und mit einem Injektor, wobei die wässrige Harnstofflösung von dem Tank entlang der Saugleitung, durch die Pumpe, durch die Druckleitung hin zum Injektor förderbar ist, wobei das Verfahren dazu ausgebildet ist einen Spülvorgang zumindest der Druckleitung durchzuführen, wobei die Pumpe während des Spülvorgangs entgegen ihrer gewöhnlichen Förderrichtung betrieben wird und der Injektor in einer ersten Phase des Verfahrens geschlossen ist, wobei die Pumpe für eine Betriebsdauer t1 und mit einer Drehgeschwindigkeit n1 während der ersten Phase des Verfahrens betrieben wird, wobei in dieser ersten Phase ein von der Betriebsdauer t1 und der Drehgeschwindigkeit n1 direkt abhängiger Unterdruck p1 in der Druckleitung erzeugt wird, wobei die Betriebsdauer t1 und die Drehgeschwindigkeit n1 abhängig von einem Kalibrierungsvorgang, welcher bei der erstmaligen Inbetriebnahme der Vorrichtung durchgeführt wird, festgelegt werden, und diese und der sich daraus ergebende Unterdruck p1 in einem Speicher der Vorrichtung abgelegt werden, wobei in einer zweiten Phase des Verfahrens der Injektor geöffnet ist und die Pumpe weiterhin entgegen ihrer gewöhnlichen Förderrichtung betrieben wird.

2. Verfahren nach Anspruch 1, **dadurch gekennzeichnet, dass** bei zumindest einem der erstmaligen Inbetriebnahme nachfolgenden Startvorgang der Pumpe ein Spülvorgang durchgeführt wird, wobei der dann in der ersten Phase des Spülvorgangs erzeugte Unterdruck p2 in der Druckleitung erfasst wird, und mit dem Unterdruck p1 abgeglichen wird, der sich aus der im Speicher abgelegten Betriebsdauer t1 und der Drehgeschwindigkeit n1 ergibt.

3. Verfahren nach Anspruch 2, **dadurch gekennzeichnet, dass** ein Abgleich der Unterdrücke p1 und p2 durchgeführt wird, wobei abhängig von der Abweichung zwischen dem Unterdruck p1 und dem Unterdruck p2 ein Korrekturfaktor K1 errechnet wird, um welchen die Betriebsdauer und/oder die Drehgeschwindigkeit von dem Wert t1 und/oder n1 auf einen Wert t2 und/oder n2 angepasst wird.

4. Verfahren nach einem der vorhergehenden Ansprüche, **dadurch gekennzeichnet, dass** während der zweiten Phase des Verfahrens durch den erzeugten Unterdruck und den fortwährenden Betrieb der Pumpe entgegen ihrer gewöhnlichen Förderrichtung eine Spülung der Druckleitung erreicht wird, wobei in der Druckleitung befindliche Fluide in Richtung der Saugleitung hin zum Tank gefördert werden.

5. Verfahren nach Anspruch 4, **dadurch gekennzeichnet, dass** der Korrekturfaktor K1, welcher abhängig von der Abweichung zwischen dem Unterdruck p1 und dem Unterdruck p2 errechnet wird, genutzt wird, um die Betriebsdauer t3 der Pumpe und oder die Drehgeschwindigkeit n3 während der zweiten Phase des Verfahrens anzupassen.

6. Verfahren nach einem der vorhergehenden Ansprüche, **dadurch gekennzeichnet, dass** der ersten Phase und der zweiten Phase eine dritte Phase nachgeschaltet ist, wobei in der dritten Phase die Pumpe in ihrer gewöhnlichen Förderrichtung betrieben wird und somit ein Überdruck in der Druckleitung erzeugt wird, wobei die Betriebsdauer t4 und/oder die Drehgeschwindigkeit n4 der Pumpe in dieser dritten Phase um den errechneten Korrekturfaktor K1 von einem Ausgangswert verändert wird.

7. Verfahren nach einem der vorhergehenden Ansprüche, **dadurch gekennzeichnet, dass** der ersten Phase und der zweiten Phase des Verfahrens eine vierte Phase nachgeschaltet ist, wobei nach der vierten Phase die dritte Phase folgt oder das Verfahren beendet wird, wobei während der vierten Phase der Injektor geschlossen ist und die Pumpe entgegen ihrer gewöhnlichen Förderrichtung für eine Betriebsdauer t5 mit einer Drehgeschwindigkeit n5 betrieben wird.

8. Verfahren nach Anspruch 7, **dadurch gekennzeichnet, dass** ein Unterdruck p5 in der Druckleitung ermittelt wird und ein Abgleich mit dem im Speicher abgelegten Unterdruck p1 vollzogen wird, wobei das Verhältnis des Unterdrucks p5 zum Unterdruck p1 einen direkten Rückschluss auf die in der Druckleitung verblieben Luft und die Menge der in der Druckleitung verbliebene wässrige Harnstofflösung erlaubt.

9. Verfahren nach einem der vorhergehenden Ansprüche, **dadurch gekennzeichnet, dass** die tatsächlich in der Druckleitung verbliebene Menge der wässrigen Harnstofflösung nach Durchlaufen der vierten Phase berechnet wird, wobei hierzu der Unterdruck p5, die Betriebsdauer t5 der Pumpe, die Drehgeschwindigkeit n5 der Pumpe, die statische Durchflussmenge des Injektors und das innere Volumen der Druckleitung verwendet werden.

10. Verfahren nach Anspruch 8 wobei die durch einen Vergleich der Unterdrücke p5 und p1 ermittelte in der Druckleitung verbliebene Menge der wässrigen Harnstofflösung mit einer nach dem Verfahren von Anspruch 9 errechneten in der Druckleitung verbliebenen Menge an wässriger Harnstofflösung verglichen wird, , **dadurch gekennzeichnet, dass** beim Überschreiten eines festgelegten maximalen Differenzwertes zwischen den beiden Mengen ein Korrekturfaktor K2 erzeugt wird, um welchen die Dauer der ersten Phase und/oder der zweiten Phase des Verfahrens korrigiert wird.

11. Verfahren nach einem der vorhergehenden Ansprüche, **dadurch gekennzeichnet, dass** ein Abgleich der Unterdrücke p1 und p2 durchgeführt wird, wobei abhängig von der Abweichung zwischen dem Unterdruck p1 und dem Unterdruck p2 ein Korrekturfaktor K3 errechnet wird, wobei der Korrekturfaktor K3 in der Folge verwendet wird, um die die Betriebsdauer t4 oder die Drehgeschwindigkeit n4 in der dritten Phase anzupassen.

12. Vorrichtung zur Förderung einer wässrigen Harnstofflösung in einem Kraftfahrzeug, mit einem Tank, mit einer Saugleitung, mit einer Pumpe, mit einer Druckleitung und mit einem Injektor, wobei die wässrige Harnstofflösung von dem Tank entlang der Saugleitung, durch die Pumpe, durch die Druckleitung hin zum Injektor förderbar ist, wobei ein Verfahren nach den vorhergehenden Ansprüchen mit dieser Vorrichtung durchführbar ist, wobei die Vorrichtung ein Mittel zur Erfassung des Drucks in der Druckleitung aufweist.

## Claims

1. Method for controlling a delivery device for an aqueous urea solution in a motor vehicle, with a tank, with a suction line, with a pump, with a pressure line, and with an injector, wherein the aqueous urea solution can be delivered from the tank along the suction line, through the pump, through the pressure line, and to the injector, wherein the method is designed to perform a rinsing procedure of at least the pressure line, wherein the pump is operated counter to its usual delivery direction during the rinsing procedure and the injector is closed in a first phase of the method, wherein the pump is operated for an operating duration t1 and at a speed of rotation n1 during the first phase of the method, wherein, in this first phase, a reduced pressure p1 directly dependent on the operating duration t1 and the speed of rotation n1 is generated in the pressure line, wherein the operating duration t1 and the speed of rotation n1 are fixed depending on a calibration procedure which is performed when the device is started up for the first time, and they and the resulting reduced pressure p1 are saved in a memory of the device, wherein, in a second phase of the method, the injector is opened and the pump continues to be operated counter to its usual delivery direction.

2. Method according to Claim 1, **characterized in that**, in the case of at least a starting procedure of the pump following start-up for the first time, a rinsing procedure is performed, wherein the reduced pressure p2 in the pressure line and then generated in the first phase of the rinsing procedure is detected and is compared with the reduced pressure p1 which results from the operating duration t1 saved in the memory and from the speed of rotation n1.

3. Method according to Claim 2, **characterized in that** a comparison of the reduced pressures p1 and p2 is performed, wherein a correction factor K1, by which the operating duration and/or the speed of rotation is adapted from the value t1 and/or n1 to a value t2 and/or n2, is calculated depending on the deviation between the reduced pressure p1 and the reduced pressure p2.

4. Method according to one of the preceding claims, **characterized in that**, during the second phase of the method, by virtue of the reduced pressure generated and the continued operation of the pump counter to its usual delivery direction, rinsing of the pressure line is achieved, wherein fluids situated in the pressure line are delivered in the direction of the suction line to the tank.

5. Method according to Claim 4, **characterized in that** the correction factor K1 which is calculated depending on the deviation between the reduced pressure p1 and the reduced pressure p2 is used in order to adapt the operating duration t3 of the pump and/or the speed of rotation n3 during the second phase of the method.

6. Method according to one of the preceding claims, **characterized in that** a third phase is added after the first phase and the second phase, wherein in the third phase the pump is operated in its usual delivery direction and hence an elevated pressure is generated in the pressure line, wherein the operating duration t4 and/or the speed of rotation n4 of the pump in this third phase is altered by the calculated correction factor K1 from an original value.

7. Method according to one of the preceding claims, **characterized in that** a fourth phase is added after the first phase and the second phase of the method, wherein the third phase follows the fourth phase or the method is ended after the fourth phase, wherein during the fourth phase the injector is closed and the pump is operated counter to its usual delivery direction for an operating duration t5 at a speed of rotation n5.

8. Method according to Claim 7, **characterized in that** a reduced pressure p5 in the pressure line is calculated and a comparison with the reduced pressure p1 saved in the memory is carried out, wherein the ratio of the reduced pressure p5 to the reduced pressure p1 allows a direct conclusion to be drawn about the air remaining in the pressure line and the amount of aqueous urea solution remaining in the pressure line.

9. Method according to one of the preceding claims, **characterized in that** the amount of aqueous urea solution actually remaining in the pressure line is computed after the fourth phase is completed, wherein for this purpose the reduced pressure p5, the operating duration t5 of the pump, the speed of rotation n5 of the pump, the static flow rate of the injector, and the internal volume of the pressure line are used.

10. Method according to Claim 8, wherein the amount of aqueous urea solution remaining in the pressure line calculated by comparison of the reduced pressures p5 and p1 is compared with an amount of aqueous urea solution remaining in the pressure line calculated according to the method of Claim 9, **characterized in that**, when a fixed maximum differential value between the two amounts is exceeded, a correction factor K2 is generated by which the duration of the first phase and/or the second phase of the method is corrected.

11. Method according to one of the preceding claims, **characterized in that** a comparison of the reduced pressures p1 and p2 is performed, wherein a correction factor K3 is calculated depending on the deviation between the reduced pressure p1 and the reduced pressure p2, wherein the correction factor K3 is subsequently used to adapt the operating duration t4 or the speed of rotation n4 in the third phase.

12. Device for delivering an aqueous urea solution in a motor vehicle, with a tank, with a suction line, with a pump, with a pressure line, and with an injector, wherein the aqueous urea solution can be delivered from the tank along the suction line, through the pump, through the pressure line, and to the injector, wherein a method according to the preceding claims can be performed with this device, wherein the device has a means for detecting the pressure in the pressure line.

## Revendications

1. Procédé de commande d'un dispositif de transport d'une solution aqueuse d'urée dans un véhicule automobile, comprenant un réservoir, une conduite d'aspiration, une pompe, une conduite de pression et un injecteur, la solution aqueuse d'urée étant transportable depuis le réservoir, le long de la conduite d'aspiration, à travers la pompe, à travers la conduite de pression jusqu'à l'injecteur, le procédé étant conçu de façon à mettre en oeuvre une opération de rinçage d'au moins la conduite de pression, la pompe étant actionnée pendant l'opération de rinçage dans le sens inverse de son sens de transport habituel et l'injecteur étant fermé dans une première phase du procédé, la pompe étant actionnée pendant une durée de fonctionnement t1 et avec une vitesse de rotation n1 pendant la première phase du procédé, une dépression p1 dépendant directement de la durée de fonctionnement t1 et de la vitesse de rotation n1 étant générée dans la conduite de pression pendant cette première phase, la durée de fonctionnement t1 et la vitesse de rotation n1 dépendant d'une opération de calibrage, qui est mis en oeuvre pendant la première mise en service du dispositif, et on enregistre celle-ci et la dépression p1 qui en résulte dans une mémoire du dispositif, l'injecteur étant ouvert dans une deuxième phase du procédé et la pompe continuant à fonctionner dans le sens inverse de son sens de transport habituel.

2. Procédé selon la revendication 1, **caractérisé en ce que**, lors d'au moins une opération de démarrage de la pompe suivant la première mise en service, il est effectué une opération de rinçage, la dépression p2 alors générée dans la conduite de pression lors de la première phase de l'opération de rinçage étant détectée et comparée à la dépression p1 résultant de la durée de fonctionnement t1 et de la vitesse de rotation n1 stockées dans la mémoire.

3. Procédé selon la revendication 2, **caractérisé en ce que** l'on procède à un équilibrage des dépressions p1 et p2, en calculant, en fonction de l'écart entre la dépression p1 et la dépression p2, un facteur de correction K1 par lequel la durée de fonctionnement et/ou la vitesse de rotation est ajustée de la valeur t1 et/ou n1 à une valeur t2 et/ou n2.

4. Procédé selon l'une des revendications précédentes, **caractérisé en ce que**, pendant la deuxième phase du procédé, on réalise un rinçage de la conduite de pression par la dépression créée et par le fonctionnement continu de la pompe à l'inverse de son sens de transport habituel, les fluides présents dans la conduite de pression étant refoulés en direction de la conduite d'aspiration vers le réservoir.

5. Procédé selon la revendication 4, **caractérisé en ce que** le facteur de correction K1, calculé en fonction de l'écart entre la dépression p1 et la dépression p2, est utilisé pour ajuster la durée de fonctionnement t3 de la pompe et/ou la vitesse de rotation n3 pendant la deuxième phase du procédé.

6. Procédé selon l'une des revendications précédentes, **caractérisé en ce que** la première phase et la deuxième phase sont suivies d'une troisième phase, la pompe étant actionnée dans son sens de transport habituel lors de la troisième phase, générant ainsi une surpression dans la conduite de pression, la durée de fonctionnement t4 et/ou la vitesse de rotation n4 de la pompe étant modifiée lors de cette troisième phase par le facteur de correction K1 calculé à partir d'une valeur initiale.

7. Procédé selon l'une des revendications précédentes, **caractérisé en ce que** la première phase et la deuxième phase du procédé sont suivies d'une quatrième phase, la quatrième phase étant suivie de la troisième phase ou le procédé étant arrêté, l'injecteur étant fermé pendant la quatrième phase et la pompe fonctionnant à l'inverse de son sens de transport habituel pendant une durée de fonctionnement t5 à une vitesse de rotation n5.

8. Procédé selon la revendication 7, **caractérisé en ce qu'**une dépression p5 est déterminée dans la conduite de pression et qu'un ajustement est effectué avec la dépression p1 stockée dans la mémoire, le rapport entre la dépression p5 et la dépression p1 permettant de tirer une conclusion directe sur l'air restant dans la conduite de pression et sur la quantité de solution aqueuse d'urée restant dans la conduite de pression.

9. Procédé selon l'une des revendications précédentes, **caractérisé en ce que** l'on calcule la quantité de solution aqueuse d'urée effectivement restée dans la conduite de pression après le passage de la quatrième phase, en utilisant à cet effet la dépression p5, la durée de fonctionnement t5 de la pompe, la vitesse de rotation n5 de la pompe, le débit statique de l'injecteur et le volume interne de la conduite de pression.

10. Procédé selon la revendication 8, dans lequel la quantité de solution aqueuse d'urée restant dans la conduite de pression, déterminée par une comparaison des dépressions p5 et p1, est comparée à une quantité de solution aqueuse d'urée restant dans la conduite de pression, calculée selon le procédé selon la revendication 9, **caractérisé en ce que**, en cas de dépassement d'une valeur de différence maximale déterminée entre les deux quantités, un facteur de correction K2 est généré, par lequel la durée de la première phase et/ou de la deuxième phase du procédé est corrigée.

11. Procédé selon l'une des revendications précédentes, **caractérisé en ce qu'**on réalise un équilibrage des dépressions p1 et p2, en calculant un facteur de correction K3 en fonction de l'écart entre la dépression p1 et la dépression p2, ledit facteur de correction K3 étant utilisé par la suite pour ajuster la durée de fonctionnement t4 ou la vitesse de rotation n4 dans la troisième phase.

12. Dispositif de transport d'une solution aqueuse d'urée dans un véhicule automobile, comprenant un réservoir, une conduite d'aspiration, une pompe, une conduite de pression et un injecteur, la solution aqueuse d'urée étant transportable depuis le réservoir, le long de la conduite d'aspiration, à travers la pompe, à travers la conduite de pression jusqu'à l'injecteur, un procédé selon les revendications précédentes étant apte à être mis en oeuvre avec ce dispositif, le dispositif comprenant un moyen de détection de la pression dans la conduite de pression.
